# EUROPEAN PATENT SPECIFICATION

(11) **EP 2 489 760 B1**
(45) Date of publication and mention of the grant of the patent: **14.06.2017**
(21) Application number: 09850377.4
(22) Date of filing: 14.10.2009
(51) Int. Cl.: C23C 28/00, B29C 65/46, B32B 15/08, B32B 37/06, B29L 9/00

(54) **METHOD FOR PRODUCING RESIN-COATED METAL PLATE**
VERFAHREN ZUR HERSTELLUNG EINER HARZBESCHICHTETEN METALLPLATTE
PROCÉDÉ POUR PRODUIRE UNE PLAQUE MÉTALLIQUE REVÊTUE DE RÉSINE

(43) Date of publication of application: 22.08.2012
(73) Proprietor: Toyo Kohan Co., Ltd., Tokyo 102-8447 (JP)
(72) Inventor: MATSUBARA, Masanobu, Kudamatsu-shi Yamaguchi 744-8611 (JP); TAYA, Shinichi, Kudamatsu-shi Yamaguchi 744-8611 (JP); KAI, Masahiro, Kudamatsu-shi Yamaguchi 744-8611 (JP); KUROKAKWA, Wataru, Yokohama-shi Kanagawa 230-0001 (JP)
(74) Representative: Hall, Matthew Benjamin
(86) International application number: PCT/JP2009/005347
(87) International publication number: WO 2011/045833

(56) References cited:
- EP-A1- 1 518 944
- JP-A- 58 092 520
- JP-A- 2002 285 354
- JP-A- 2003 260 758

## Description

### Technical Field

The present invention relates to a method for manufacturing a resin-coated metal sheet having excellent working adhesiveness.

### Background Art

Recently, there has been manufactured a can where a top plate is seamed to a can body which is an integral body formed of a can barrel portion and a can bottom portion by working. The can body is formed by making a steel sheet covered with a resin subjected to rigorous working such as drawing, further stretching after drawing, further ironing after drawing or working in which both stretching and ironing are further performed after drawing.

Such a can body is, to prevent peeling or breaking of a coated resin during the rigorous forming working and after such forming working, required to have excellent adhesiveness of a resin to the steel sheet.

Accordingly, as a raw material for such a can body, there has been used a resin coated chromate treated steel sheet where chromate treated steel sheet such as a tin free steel having a surface on which a chromate film having excellent working adhesiveness is formed is covered with an organic resin.

However, in the can body manufactured using the resin coated chromate treated steel sheet, when a minute hole or crack which is formed in the resin layer and reaches the surface of the steel sheet, due to the insufficient corrosion resistance of the chromate treated steel sheet, there exists a drawback that, the corrosion of the steel sheet is liable to rapidly progress particularly when the content filled in the can body has a lot of acidity.

In view of the above, to cope with such a drawback, an attempt has been made to use a resin-coated tin-plated steel sheet which is manufactured by applying a resin to a tin-plated steel sheet which exhibits excellent corrosion resistance even when the content of the can contains a lot of acidity. However, the adhesiveness of a resin to a tin-plating layer is insufficient, particularly, the film working adhesiveness at the time of can body working is insufficient and hence, there has been a demand for the development of a material having excellent film working adhesiveness even when the material is subjected to the above-mentioned rigorous working.

To overcome the above-mentioned drawbacks, patent document 1 describes a resin-coated tin-plated steel sheet which is formed such that a silane coupling agent coating layer is formed on a tin-plating layer of a non-reflow tin plated sheet steel or a reflow tin plated sheet steel, and an organic resin film is laminated to the silane coupling agent coating layer.

Patent document 1: JP-A-2002-285354

### Disclosure of the Invention

### Problems that the Invention is to Solve

However, when the resin-coated tin-plated steel sheet described inpatent document 1 is formed into a can body by working by the additional use of both stretching and ironing after drawing, there is a case where a resin peels off at an upper portion of the can body in the midst of forming working thus giving rise to a drawback in film working adhesiveness at the time of performing can body working.

It is an object of the present invention to overcome the above-mentioned drawbacks and to provide a method for manufacturing a resin-coated tin-plated metal sheet having excellent film working adhesiveness even at the time of rigorous forming working.

### Means for Solving the Problems

(1) The present invention provides a method for manufacturing a resin-coated metal sheet comprising the steps of:
   forming a tin-plating layer on at least one surface of a metal sheet;
   applying a silane coupling agent to the tin-plating layer by coating;
   forming a resin layer on the silane coupling agent coating layer;
   heating at least an interface region between the tin-plating layer and the silane coupling agent coating layer, the silane coupling agent coating layer, and an interface region between the silane coupling agent coating layer and the resin layer at a temperature which falls within a range from a temperature 10°C below a melting point of a resin of the resin layer to a temperature 100°C above the melting point of the resin of the resin layer, and
   wherein after heating the metal sheet, the resin is cooled at a rate of 30°C/sec or more in the crystallization temperature region of the resin.

   With respect to the step "heating at least an interface region between the tin-plating layer and the silane coupling agent coating layer, the silane coupling agent coating layer, and an interface region between the silane coupling agent coating layer and the resin layer at a temperature which falls within a range from a temperature 10°C below a melting point of a resin to a temperature 100°C above the melting point of the resin", the step can be realized in such a manner that, for example, in heating the whole steel sheet by high frequency heating, an output of an oscillator of a high frequency heating device is controlled by controlling a high frequency current or a DC current thus changing a maximum heating temperature and a heating time whereby a temperature of a portion to be melted is elevated and the elevation of the temperature in other portions is suppressed to a predetermined temperature or below.
(2) The method for manufacturing a resin-coated metal sheet according to the present invention is, in the above-mentioned (1), characterized in that a heating temperature of the metal sheet is set to a temperature which falls within a range from a temperature 30°C above a melting point of a resin to a temperature 60°C above the melting point of the resin.
(3) The method for manufacturing a resin-coated metal sheet according to the present invention is, in any one of the above-mentioned (1) or (2), characterized in that the heating of the metal sheet is performed by high frequency heating.
(4) The method for manufacturing a resin-coated metal sheet according to the present invention is, in any one of the above-mentioned (1) to (3), characterized in that with respect to a temperature of the resin at the time of heating the metal sheet, the heating is performed at a rate of 5°C/sec or more in a crystallization temperature region of the resin.
(5) The method for manufacturing a resin-coated metal sheet according to the present invention is, in any one of the above-mentioned (1) to (4), characterized in that a tin coating weight of the tin-plating layer is set to a value which falls within a range of 0.5 to 13g/m².
(6) The method for manufacturing a resin-coated metal sheet according to the present invention is, in any one of the above-mentioned (1) to (5), characterized in that the silane coupling agent is a water-soluble amino-based silane coupling agent, and a Si coating weight is set to a value which falls within a range of 0.5 to 30mg/m².

### Advantageous Effects of the Invention

In the method for manufacturing a resin-coatedmetal sheet according to the present invention, a silane coupling agent is applied to a tin-plating layer by coating, and a resin film is laminated to the silane coupling agent coating layer by thermal bonding and, thereafter, heat treatment is applied to the metal sheet and hence, it is possible to provide a resin-coated metal sheet which exhibits excellent working adhesiveness compared to the prior art.

### Best Mode for Carrying out the Invention

A mode for carrying out the present invention is explained in detail hereinafter.

### [Metal sheet]

With respect to a metal sheet used as a resin-coated metal sheet of the present invention, depending on usage, a cold-rolled steel sheet having a sheet thickness of 0.15 to 0.3mm which is produced such that a normal hot-rolled sheet made of aluminum-killed steel is subjected to cold rolling, is annealed and, thereafter, is subjected to temper rolling, a cold-rolled steel sheet whose strength is increased by further applying cold rolling to the steel sheet after annealing or the like is used.

The cold-rolled steel sheet is subjected to electrolytic degreasing and pickling and, thereafter, a tin-plating layer is formed on the steel sheet thus manufacturing a tin-plated steel sheet.

As the tin-plated steel sheet, a tin-plated steel sheet which is produced in such a manner that tin plating is applied to a steel sheet using a known Ferrostan tin plating bath, a halogen tin plating bath or a sulfuric-acid tin plating bath, the steel sheet is heated to a melting temperature of tin or above and, thereafter, the steel sheet is quenched (reflow treatment) thus forming a Sn-Fe alloy layer between the steel sheet and a tin-plating layer, a tin-plated steel sheet which is produced without applying heat melting treatment to the tin-plating layer (no-ref low treatment) or the like can be used.

Further, as the tin-plated steel sheet, an island-like tin-plated steel sheet where an island-like tin layer is formed or the like can be also used. The island-like tin-plated steel sheet is produced by a method where nickel plating is applied to a cold-rolled steel sheet and, thereafter, tin plating is applied to nickel plating, the steel sheet is heated to a melting temperature of tin or above, and the steel sheet is quenched. The island-like tin-plated steel sheet can be also produced by a method where nickel plating is applied to a cold-rolled steel sheet and, thereafter, the steel sheet is heated after nickel plating so as to diffuse Ni in steel thus forming a Ni-Fe alloy layer and tin plating is applied to the Ni-Fe alloy layer, the steel sheet is heated to a melting temperature of tin or above, and the steel sheet is quenched.

A coating weight of tin on a tin-plated steel sheet is preferably set to a value which falls within a range of 0.5 to 13 g/m² from viewpoints of corrosion resistance and economic efficiency. When the coating weight of tin is less than 0.5 g/m², corrosion resistance becomes insufficient. Accordingly, the coating weight of less than 0.5 g/m² is not preferable.

Particularly, when reflow treatment is applied, entire plated tin is transformed into a Fe-Sn alloy so that not only corrosion resistance but also workability are remarkably deteriorated. Accordingly, the coating weight of tin of at least 0.5 g/m² or more is necessary.

On the other hand, when the coating weight exceeds 13 g/m², a corrosion resistance effect which beverage cans and food cans are required to possess is saturated, and uneven melting of tin, edge sagging of tin or the like occurs at the time of performing reflow so that a surface state of the tin-plated sheet is deteriorated.

Next, a silane coupling agent is applied to the tin-plating layer formed in the above-mentioned manner by coating, and the silane coupling agent is dried.

As a silane coupling agent, various kinds of silane coupling agents such as a vinyl-based silane coupling agent, an acryl-based silane coupling agent, an epoxy-based silane coupling agent, an amino-based silane coupling agent, a mercapto-based silane coupling agent and a chlorophyll-based silane coupling agent can be used. However, from a viewpoint of easiness of handling and the preservation of environment, a water-soluble coupling agent is preferably used.

It is also important that the silane coupling agent exhibits excellent preservation stability, and it is also a prerequisite that the silane coupling agent has no toxicity in view of a fact that a resin-coated metal sheet is used for manufacturing food cans and beverage cans.

To determine these factors in a comprehensive manner, it is most preferable to use an amino-based silane coupling agent.

As the amino-based silane coupling agent, aminopropyltrimethoxy silane, aminopropylmethyldiethoxy silane, aminopropyl triethoxy silane, phenylaminopropyl trimethoxy silane or the like can be used. As an example of the amino-based silane coupling agent, KBM-903, KBM603, KBE903 all of which are made by Shinetsu Chemical Industries are named. These silane coupling agents exhibit excellent water solubility and preservation stability and the use of these silane coupling agents is authorized by FDA (abbreviation of Food and Drug Administration).

5 to 200g/L of aqueous solution of a silane coupling agent is applied to the above-mentioned tin-plated steel sheet by coating, and the silane coupling agent was dried.

As a coating method and a drying method, known methods can be used. For example, as the coating method, an immersion method, a roll coating method, a method where a surplus amount of silane coupling agent is squeezed using a squeezing rolls after immersion, a spraying method, a electrolytic processing method or the like can be named. As the drying method, a drying methodwhere a coated silane coupling agent is dried by an electric oven at a temperature of 100°C for 5 minutes can be named.

The resin-coated metal sheet of the present invention can be obtained by laminating an organic resin film which constitutes a resin layer to one surface or both surfaces of the tin-plated steel sheet obtained in the above-mentionedmanner in such a manner that the organic resin film is brought into contact with the silane coupling agent coated layer.

The organic resin film may preferably be formed using a thermoplastic resin having excellent workability even after heating. That is, the organic resin filmmay be a single-layered resin film made of: a polyester resin such as polyethylene terephthalate, polybutylene terephthalate, polyethylenenaphthalate, ethylene terephthalate ethylene isophthalate copolymer or butylene terephthalate butylene isophthalate copolymer; a resin which is formed by mixing two or more kinds of these polyester resins; polyethylene, polypropylene, ethylene propylene copolymer or these resins modified with a malaic acid; a polyolefin resin such as ethylene vinyl acetate copolymer or ethylene acrylic acid copolymer; a polyamide resin such as 6-nylon, 6, 6-nylon or 6, 10-nylon; polycarbonate; polymethylpentene; or a mixture of the above-mentioned polyester resin and ionomer, a multi-layered resin film which is made of two or more kinds of resins selected from the above-mentioned resins or the like.

A thickness of the resin film is preferably set to a value which falls within a range of 10 to 100µm from viewpoints of easiness of a film laminating operation, the adhesive strength of the resin film of a formed body (can or the like) after performing the forming working of the resin coated metal sheet, corrosion resistance and economic efficiency.

The resin film is formed such that resinpellets are melted by heating, and a melted body is extruded from a T die of an extruder thus forming a film having a desired thickness. Then, as a resin layer, the resin film is formed on a silane coupling agent coating layer which is applied to the tin-plating layer of the tin-plated steel sheet by coating.

As a method for forming the resin layer, for example, a thermal bonding method is named. In this method, a resin film is brought into contact with a tin-plated steel sheet which is heated to a temperature which falls within a predetermined temperature range, and the tin-plated steel sheet and the resin film are sandwiched and pressurized by a pair of pressurizing rollers and hence, the tin-plated steel sheet and the resin film are brought into pressure contact with each other.

According to such a method, by using a resin film formed as film without applying stretching to the resin film, the resin film can be thermally bonded at a temperature extremely lower than a melting temperature of tin.

### [Treatment of material to be treated]

According to the present invention, after forming the resin layer as described above, an interface region between the tin-plating layer and the silane coupling agent coating layer, the silane coupling agent coating layer, and an interface region between the silane coupling agent coating layer and the resin layer are heated to a temperature which falls within a range from "a temperature 10°C below a melting point of a resin" to "a temperature 100°C above the melting point of the resin". As treatment of a material to be treated, post-heating treatment is applied to the material to be treated.

A post-heating temperature is more preferably set to a value which falls within a range from "a temperature 30°C above a melting point" of a coated resin film to "a temperature 60°C above the melting point" of the coated resin film.

When the heated temperature of the coated resin film is below "a temperature 10°C below a melting point of the coated resin", the interface region is not sufficiently softened so that adhesiveness of the coated resin film is not enhanced, and an adhesiveness effect of the silane coupling agent which can be acquired by heating cannot be sufficiently acquired.

On the other hand, when the heating temperature is "a temperature 100°C above the melting point of the coated resin" or above, a temperature of a bulk layer of the resin layer is excessively elevated so that air bubbles are liable to be generated in the resin layer. Accordingly, such a heating temperature is not preferable.

The above-mentioned post-heating is performed such that the temperature of the interface region falls within the above-mentioned temperature range while preventing the generation of air bubbles in the resin layer and hence, the resin layer and the tin-plating layer are softened or melted only in the interface regions thus enhancing the adhesiveness of the resin layer and the tin-plating layer.

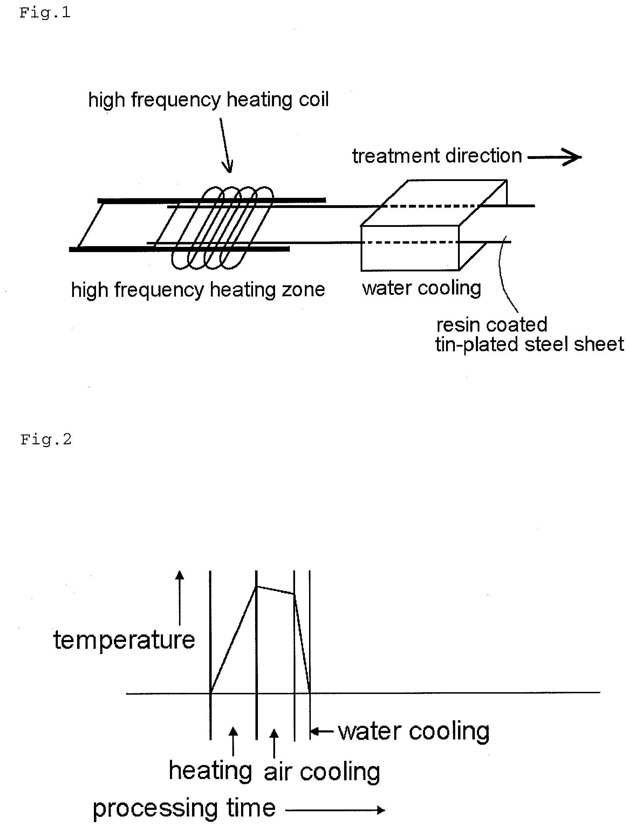

As a specific means, treatment is preferably applied to the material to be treated using a device shown in Fig. 1 as follows. A high frequency coil is wound orthogonal to the advancing direction of the resin coated metal sheet which is passed after resin coating, and treatment is applied to the metal sheet in a heat cycle shown in Fig. 2 where the metal sheet is heated to a predetermined temperature and, then, the metal sheet which passes through the high frequency coil is cooled with air and is cooled with water to an ambient temperature.

### [Coating of silane coupling agent]

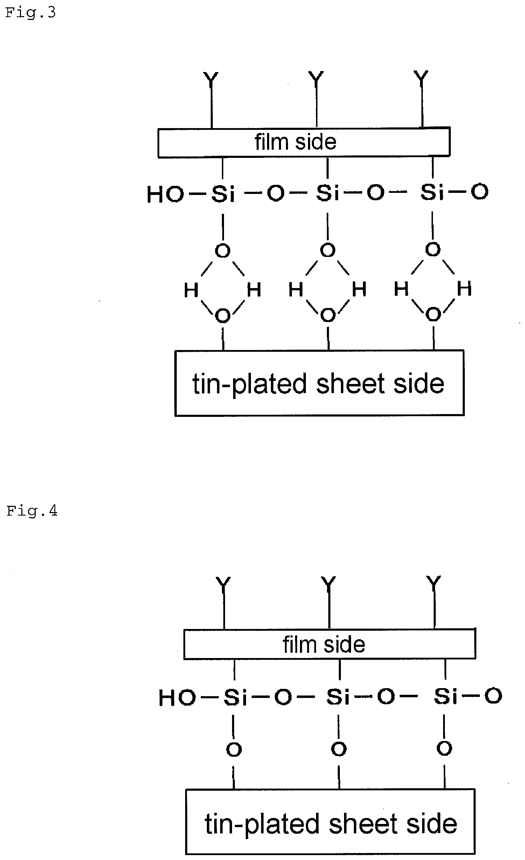

Next, an effect which a silane coupling agent exerts on the adhesiveness of the film at the time of applying post-heat treatment is explained in detail in conjunction with Fig. 3 and Fig. 4.

Ina statewhere silane coupling agent treatment is applied to a tin-plated steel sheet and resin is applied to steel sheet by coating, as shown in Fig. 3, a large number of OH groups remain in an interface between the tin-plated steel sheet and the coated resin film so that adhesiveness of the resin is weak.

Acoatingweight of the silane coupling agent is preferably set to a value which falls within a range of 0.5 to 30mg/m² in terms of a Si coating weight.

When the Si coating weight is less than 0.5 mg/m², the working adhesiveness of the coated resin which is laminated to the silane coupling agent coating layer is not enhanced so that advantageous effects of the present invention cannot be acquired.

On the other hand, even when the Si coating weight exceeds 30 mg/m², the further enhancement of the working adhesiveness of the coated resin is not recognized and the further applying of the silane coupling agent is unnecessary also from a viewpoint of a cost.

Then, the resin coated metal sheet is heated to "a temperature 10°C below a melting point of the coated resin" or above. Due to such heating, as shown in Fig. 4, a dehydration-condensation reaction of the silane coupling agent progresses sufficiently and hence, a bonding force between Sn and the film is strengthened thus remarkably enhancing the adhesiveness of the film.

As can be understood from a DSC (differential scanning calorimetry) curve or the like, softening of the resin layer starts at a temperature approximately 10°C below a nominal melting point so that the effect of this treatment is recognized also at the temperature 10°C lower than the melting point of the resin. Accordingly, in the present invention, the heating temperature is set to "a temperature 10°C below a melting point of the coated resin" or above.

With respect to a heating rate of the resin coated metal sheet, it is preferable to perform the temperature elevation within a crystallization temperature region of the resin film (120°C to 180°C) in a time as short as possible from a viewpoint of preventing the crystallization of the resin film. In this respect, it is preferable to adopt a treatment means which exhibits a high heating rate such as high-frequency induction heating or electrical heating.

However, when the resin film is held within the crystallization temperature region after the resin film is applied to the metal sheet by coating, the crystallization of the resin film progresses thus giving rise to a drawback such as the generation of delamination at the time of can body working. Accordingly, the heating rate of the resin coated steel sheet is desirably set to 5°C/sec or more.

It is thought that when the heating rate is below 5°C/sec, a passing time of the resin-coated steel sheet within the crystallization temperature region is prolonged so that the crystallization of the resinfilm progresses. Accordingly, the heating rate of below 5°C/sec is not preferable.

The determination of a coating weight of a silane coupling agent is described hereinafter.

Next, the adhesive strength of the resin layer which is applied to the metal sheet by the above-mentioned treatment method is explained.

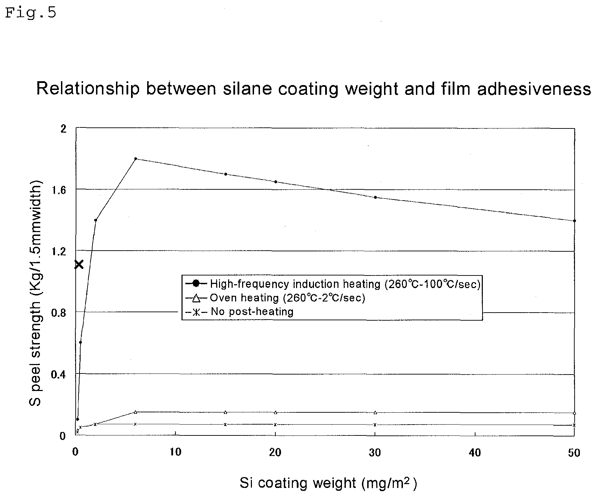

Fig. 5 is a graph showing the relationship between a silane coupling agent coating weight (axis of abscissas) and S peel strength (axis of ordinate).

As shown in Fig. 5, even when the silane coupling agent is applied to the metal sheet by coating, film adhesiveness is not enhanced remarkably under a condition "no post-heating" or under a condition "oven heating (the temperature of the film being elevated to 260°C at 2°C/sec: low speed heating)",.

On the other hand, under a condition "high-frequency induction heating (the temperature of the film being elevated to 260°C at 100°C/sec: high speed heating)", along with the increase of a coating weight of the silane coupling agent, the S peel strength is increased, and when the Si coating weight is 6 mg/m², the film adhesiveness (S peel strength) becomes maximum. The adhesiveness of the film is enhanced even under a condition that the silane coupling agent coating weight is 30 mg/m² in terms of Si coating weight compared to a case where the silane coupling agent is not applied. However, it is thought that when the Si coatingweight exceeds 30 mg/m², cohesive failure occurs in the silane layer and hence, the adhesiveness of the film is lowered.

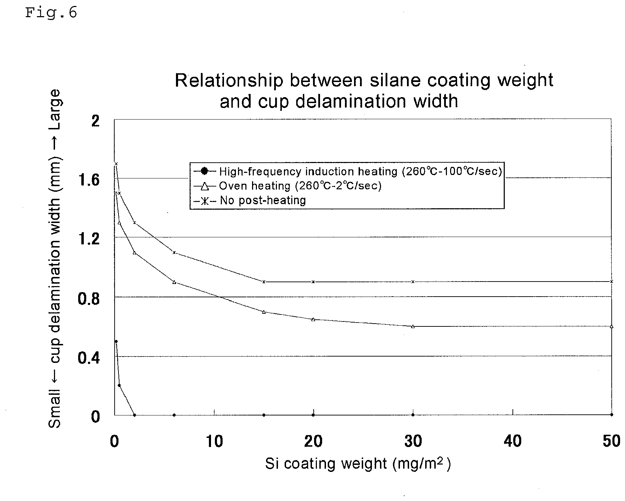

Next, a resin coated metal sheet where a metal sheet is coated with a resin by the treatment method is formed into a shallow drawn cup. Fig. 6 shows a result of the investigation of a size of a cup delamination width of such a cup in relation to a silane coupling agent coating weight.

Even when the silane coupling agent is applied to the metal sheet by coating, delamination is hardly eliminated under a condition "no post-heating" or under a condition "oven heating (the temperature of the film being elevated to 260°C at 2°C/sec: low speed heating)".

On the other hand, on a condition "high-frequency induction heating (the temperature of the film being elevated to 260°C at 100°C/sec: high speed heating)", along with the increase of a coating weight of the silane coupling agent, the cup delamination width is decreased. When the silane coupling agent coating weight exceeds 0.5 mg/m² in terms of Si coating weight, delamination is almost eliminated.

Accordingly, the coating weight of the silane coupling agent is preferably set to a value which falls within a range of 0.5 to 30mg/m² in terms of Si coating weight, and is more preferably set to a value which falls within a range of 0.5 to 6mg/m².

Here, the cup delamination width is a value obtained by measuring the delamination of the cup as follows. That is, a distal end of the cup is photographed in an enlarged manner using a stereomicroscope, and a delamination width is measured by observing an end portion of the cup on a photograph.

A fluorescent X-ray method or the like can be used for measuring the Si coating weight.

### [Cooling rate at which material to be treated is cooled]

Further, in a method for cooling the resin coated metal sheet after post-heating, it is preferable to make the resin coated metal sheet pass the above-mentioned crystallization temperature region of the resin (120°C to 180°C) within a short time.

That is, it is desirable that the resin is cooled at a rate of 30°C/sec or more in the crystallization temperature region after post-heating.

It is thought that when the cooling rate is less than 30°C/sec, a passing time of the resin coated metal sheet within the crystallization temperature region is prolonged so that the crystallization of the resin film progresses. Accordingly, the cooling rate of less than 30°C/sec is not preferable.

In such a cooling operation, it is preferable that a water cooling means such as spraying or dipping is adopted as a cooling means.

### Examples

Hereinafter, the present invention is specifically explained in conjunction with examples 1 to 12 and comparison examples 1 to 3.

### [Formation of tin-plated steel sheet]

The low carbon cold rolled steel sheet indicated in a column "sheet thickness" in Table 1 is subjected to electrolytic degreasing in an alkali aqueous solution and washing with water. Then, the steel sheet is subjected to sulfuric acid pickling and washing with water. Thereafter, a tin-plating layer is formed on the steel sheet under conditions shown in Table 1 using a Ferrostan tinplatingbath. Then, reflowprocessing is applied to the steel sheet.

Next, an aqueous solution of a silane coupling agent is applied to each tin-plating layer by coating and is dried thus forming silane coupling agent coating layers having Si coating weights indicated in the examples and the comparison examples shown in Table 1 respectively.

### [Formation of resin coated metal sheet]

On one surface of the tin-plated steel sheet (a surface which constitutes an inner surface side of a can) shown in the examples 1 to 12 and the comparison examples 1 to 3, a clear non-stretched film having a thickness of 28µm which is made of transparent ethylene terephthalate ethylene isophthalate copolymer (PETI) is laminated, while on the other surface of the tin-plated steel sheet (a surface which constitutes an outer surface side of the can), a white non-stretched film which is made of a white material formed by adding 20 mass% of titanium based white pigment to the same ethylene terephthalate ethylene isophthalate copolymer is laminated under conditions shown in Table.

After the lamination of the resin films to the respective surfaces of the tin-plated steel sheet, the steel sheet is immediately cooled.

Then, after the lamination of the resin film is finished, post-heating treatment is applied under conditions for treating a material to be treated indicated in Table 1 thus producing a resin coated metal sheet.

Here, among high frequency induction heating setting conditions indicated in Table 1, Ihf indicates a high frequency current before the output transformation, IdcL indicates a DC current which is obtained by converting an AC current to the DC current using a rectifier, and Vdc indicates a DC voltage which is obtained by converting a power source voltage to a DC voltage respectively.
In the embodiment 1,
Ihf, IdcL and Vdc are respectively set as follows.
Ihf = 38.5 [A]
Idcl = 10.7 [A]
Vdc = 280 [V]

Out of these values, a heating temperature can be elevated by increasing Ihf and IdcL.

Further, "MAX sheet temperature" in the conditions for treating a material to be treated in Table 1 indicates a maximum value of a sheet temperature during heating.

"sheet heating rate" in Table 1 indicates a heating rate from a room temperature to a maximum sheet temperature, and is obtained by dividing the elevated temperature by time required for such elevation of temperature. That is, "sheet heating rate" indicates a value of an amount of temperature elevation per 1 second.

"cooling rate" in Table 1 indicates a cooling rate from a maximum sheet temperature to a room temperature, and is obtained by dividing the lowered temperature by time required for such lowering of temperature. That is, "cooling rate" indicates a value of an amount of temperature lowering per 1 second.

### [Evaluation]

The working adhesiveness of the coated resin with respect to the tin-plated steel sheet is evaluated by adopting S peel strength which indicates peeling strength.

Conventionally, adhesiveness of a coated resin is evaluated by measuring T peel strength in a state of a flat plate before working. However, it is considered that this measurement does not always accurately reflect working adhesiveness. Accordingly, in the present invention, S peel strength is adopted as an evaluation method which accurately reflects adhesiveness (working adhesiveness) during working and after working when rigorous forming working where the steel sheet is formed into a can body by further applying both stretching and ironing after drawing is applied to the steel sheet.

S peel strength is strength by which working adhesive strength is evaluated based on peeling strength of a resin film of a specimen which is cut out from a side wall of a cup formed by applying drawing to a resin-coated metal sheet.

A specific measuring method of S peel strength is explained hereinafter.

A blank having a diameter of 154mm is punched out from a resin-coatedmetal sheet, and drawing of a first stage is applied to the blank at a drawing ratio of 1.64 thus forming a drawn cup having a diameter of 96mm and a height of 42mm.

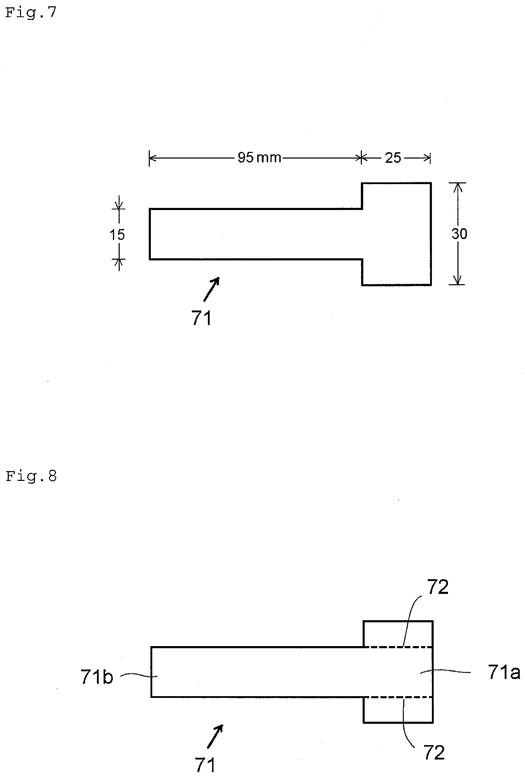

A side wall portion of the drawn cup having a size of 30mm in the cup height direction and 120mm in the cup circumferential direction is cut out from the cup, the cut-out side wall portion is bent back to a planar shape and, thereafter, a T-shaped specimen 71 having a size shown in Fig. 7 which is a plan view is punched out from the cut-out side wall portion by a press mold.

Then, as shown in Fig. 8, a cut 72 is formed in a coated resin on a surface of a one-side (right) end portion 71a of the specimen 71 ona side (aback-side surface in the drawing) opposite to an adhesive strength measuring surface (a viewer's side surface in the drawing) using a cutter knife such that the cut 72 reaches a surface of the tin-plated steel sheet.

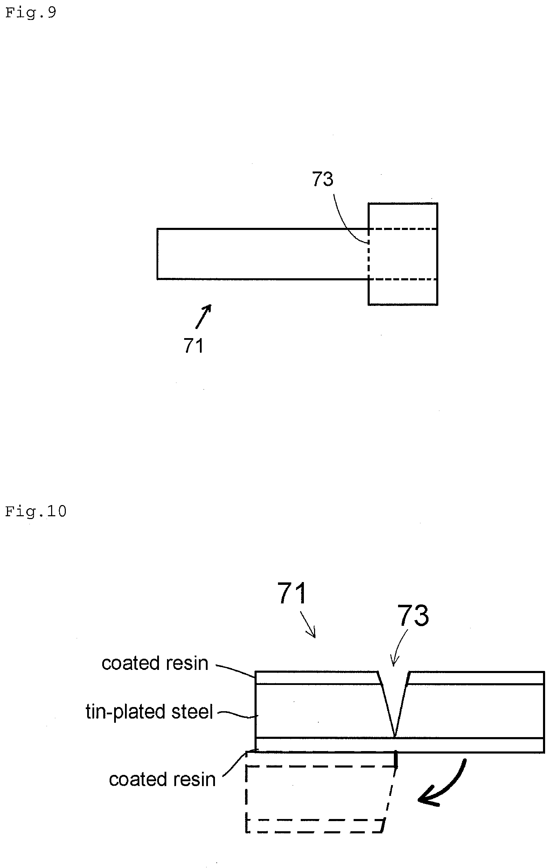

Further, as shown in Fig. 9 and Fig. 10, a score 73 is formed in the surface opposite to the adhesive strength measuring surface (the surface in which the cut 72 is formed) using a score forming die set and, thereafter, the score portion is folded and only the tin-plated steel sheet is cut.

Here, the coated resin is not cut on the adhesive strength measuring surface, and the coated resin remains on both sides of tin-plated steel sheets separated by cutting in a connected state.

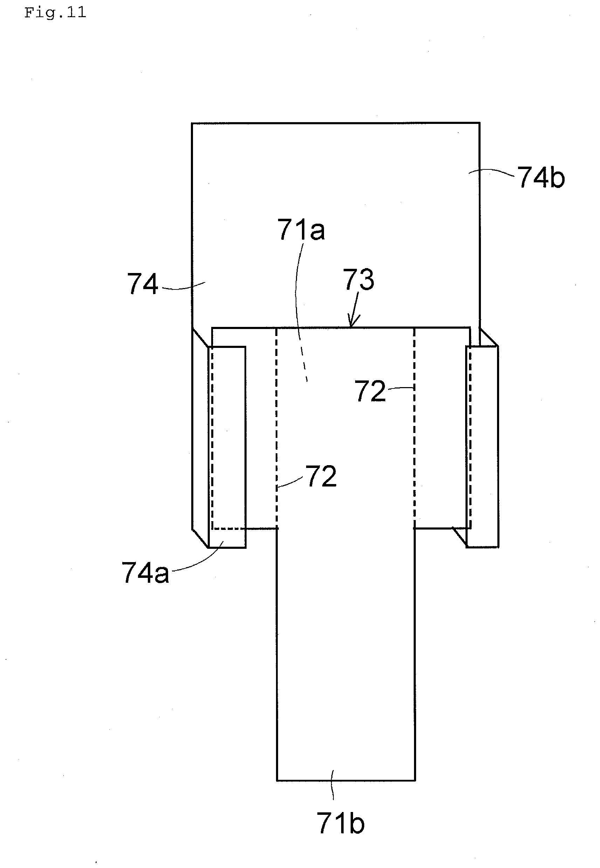

Next, as shown in Fig. 11, one end portion 71a is inserted into a specimen insertion portion 74a of a specimen holder 74, thus fixing the specimen 71 in the specimen holder 74 and, thereafter, an upper portion 74b of the specimen holder 74 and the other end portion 71b of the specimen 71 are pulled from each other while being clamped by both chuck portions of a tensile tester, and the coated resin is forcibly peeled off from the tin-plated steel sheet, and tensile strength is measured, this value is set as S peel strength, and the working adhesive strength is evaluated.

The S peel strength measured as described above is preferably set to 0. 6kg/15mm or more when a specimen has a width of 15mm. When the S peel strength is less than 0.6kg/15mm, it is impossible to acquire the stable and favorable working adhesiveness in rigorous forming working such as can making working where both stretching and ironing are performed after drawing.

In this embodiment, specimens for measuring S peel strength are prepared from resin coated metal sheets of the examples 1 to 12 and the comparison examples 1 to 3 shown in Table 1 in the following manner. A blank having a diameter of 151mm is punched out and, thereafter, in such a manner that a surface of the blank which is coated with a transparent resin film forms a cup inner surface side (in such a manner that a surface coated with a resin film containing white pigment forms an outer surface of the can), first-stage drawing is applied to the blank with a drawing ratio of 1.64 thus forming a drawing 1st cup, a B/M can and a Fi can, wherein the transparent resin film coated surface becomes a measuring surface.

Next, S peel strengths of these specimens are measured using a tensile tester.

Further, the presence or the non-presence of the delamination (peeling of film) at a cup distal end is observed with respect to the 1st cup and the B/M can. Still further, retort scratch delamination evaluation is made with respect to the Fi can by checking the presence of scratches on an outer-surface white side and an inner-surface clear side with naked eyes.

Here, the 1st cup is a cup which is manufactured by drawing a sheet, the B/M can is a can having a small can diameter and a large side wall height which is formed by further drawing and ironing the 1st cup, and the Fi can is a can which is manufactured by further trimming, flanging and necking the B/M can.

The result of the above-mentioned evaluation is shown in Table 2.

The cups of the examples 1 to 12 exhibit the inner-surface S peel strength of 0.7Kg/15mm or more with respect to all of the 1st cup, the B/M can and the Fi can so that these cups are excellent in the working adhesiveness of the resin film at the time of rigorous can forming working.

Further, no delamination is observed at the distal end of the cup with respect to the 1st cup and the B/M can, and retort scratch delamination is not also observed with respect to the Fi can.

To the contrary, with respect to the cup of the comparison examples 1 to 3, when the forming working is applied to the 1st cup, the adhesiveness between the resin film at the distal end portion of the cup and the tin-plated steel sheet becomes defective so that the delamination occurs at the distal end portion of the cup.

In the comparison examples 1, 2, breaking of the barrel portion occurs at the time of performing B/M can working and hence, it is found that the comparison examples 1, 2 are not suitable as a raw material for can body working.

In Tables, the expression of an upward arrow means that a value described in one column is equal to a value in another column above one column.

**[Table 1]**

| | heating method | high frequency induction heating setting condition | | | specification of material to be treated | | | | | | conditions on treating material to be treated | | |
|---|---|---|---|---|---|---|---|---|---|---|---|---|---|
| No | | Ihf | IdcL | Vdc | material | plating | silane coupling agent coating weight | sheet thickness | laminated film | melting point of laminated film | MAX sheet temperature | sheet heating rate | cooling rate |
| embodiment 1 | high-frequency induction heating | 38.5A | 10.7A | 280V | low carbon steel sheet | tin plating (Sn=2.8g/m2) | Si=5mg/m2 | 0.20mm | 28m/16m non-stretched PET | 220°C | 240°C | 5°C/sec | 100°C/sec |
| 2 | ↑ | 43.2A | 13.2A | ↑ | ↑ | ↑ | ↑ | ↑ | ↑ | ↑ | 280°C | 140°C/sec | ↑ |
| 3 | ↑ | 46.5A | 15.2A | ↑ | ↑ | ↑ | ↑ | ↑ | ↑ | ↑ | 320°C | 160°C/sec | ↑ |
| 4 | ↑ | 43.2A | 13.2A | ↑ | ↑ | ↑ | ↑ | ↑ | ↑ | ↑ | 280°C | 140°C/sec | 30°C/sec |
| 5 | ↑ | ↑ | ↑ | ↑ | ↑ | tin plating Sn=0.7g/m2) | ↑ | ↑ | ↑ | ↑ | ↑ | ↑ | 100°C/sec |
| 6 | ↑ | ↑ | ↑ | ↑ | ↑ | tin plating (Sn=4.0g/m2) | ↑ | ↑ | ↑ | ↑ | ↑ | ↑ | ↑ |
| 7 | ↑ | ↑ | ↑ | ↑ | ↑ | ↑ | 0.5mg/m2 | ↑ | ↑ | ↑ | ↑ | ↑ | ↑ |
| 8 | ↑ | ↑ | ↑ | ↑ | ↑ | ↑ | 30mg/m2 | ↑ | ↑ | ↑ | ↑ | ↑ | ↑ |
| 9 | ↑ | 28A | 7A | 280V | ↑ | tin plating (Sn=2.8g/m2) | 5mg/m2 | ↑ | ↑ | ↑ | 180°C | 120°C/sec | ↑ |
| 10 | ↑ | 43.2A | 13.2A | ↑ | ↑ | ↑ | 0.5mg/m2 | ↑ | ↑ | ↑ | 260°C | 140°C/sec | ↑ |
| 11 | ↑ | ↑ | ↑ | ↑ | ↑ | ↑ | 5mg/m2 | ↑ | ↑ | ↑ | ↑ | ↑ | 30°C/sec |
| 12 | electric oven heating | - | - | - | ↑ | ↑ | ↑ | ↑ | ↑ | ↑ | ↑ | 2°C/sec | ↑ |
| comparison example 1 | high-frequency induction heating | 50A | 16A | ↑ | ↑ | ↑ | ↑ | ↑ | ↑ | ↑ | 350°C | 175°C/sec | 100°C/sec |
| 2 | ↑ | 43.2A | 13.2A | ↑ | ↑ | tin plating (Sn=15g/m2) | ↑ | ↑ | ↑ | ↑ | 260°C | 140°C | 2°C/sec |
| 3 | no post-heating | - | - | - | ↑ | tin plating (Sn=2.8g/m2) | ↑ | ↑ | ↑ | - | - | - | - |
| In Table, symbol - means that a condition or a value described in one column is equal to a condition or a value in another column above one column. | | | | | | | | | | | | | |

**[Table 2]**

| 1st cup | | | B/M can | | Fi can | | | comprehensive evaluation |
|---|---|---|---|---|---|---|---|---|
| | | | | | | retort scratch delamination evaluation | | |
| No | inner-surface S peel strength | cup distal end delamination | inner-surface S peel strength | cup distal end delamination | inner-surface S peel strength | outer surface white side | inner surface clear surface | |
| embodiment 1 | 0.6Kg/15mm | good | 0.9Kg/15mm | good | 2Kg/15mm | good | good | excellent |
| 2 | 1.4 | good | 1.2 | good | ↑ | good | good | excellent |
| 3 | 1.2 | good | 1 | good | ↑ | good | good | excellent |
| 4 | 1.2 | good | 1 | good | ↑ | good | good | excellent |
| 5 | 1 | good | 0.8 | good | ↑ | good | good | excellent |
| 6 | 0.8 | good | 0.9 | good | 30mg/m2 | good | good | excellent |
| 7 | 0.7 | good | 0.8 | good | 5mg/m2 | good | good | excellent |
| 8 | 1.3 | good | 0.8 | good | 0.5mg/m2 | good | good | excellent |
| 9 | 0.7 | good | 0.7 | good | 5mg/m2 | good | good | good |
| 10 | 0.8 | good | 0.7 | good | ↑ | good | good | good |
| 11 | 0.7 | good | 0.6 | good | ↑ | good | good | good |
| 12 | 0.8 | good | 0.7 | good | ↑ | good | good | good |
| comparison example 1 | 1.3 | fair | barrel broken | - | - | - | - | bad |
| 2 | 0.5 | bad | barrel broken | - | - | - | - | bad |
| 3 | 0.1 | bad | 0.7 | bad | 1.3Kg/15mm | bad | bad | bad |

As has been explained heretofore, even when any working such as drawing, further stretching after drawing, or further ironing after drawing is applied to the resin coated metal sheet, there is no possibility that a resin film is peeled off at the time of forming working so that the resin-coated metal sheet exhibits the stable and excellent working adhesiveness. Further, also at the time of performing can body forming working where both stretching and ironing are further applied to a can body after more rigorous drawing, there is no possibility that a resin film is peeled off so that the resin-coated metal sheet exhibits the stable and excellent working adhesiveness.

### Industrial applicability

The resin coated metal sheet of the present invention which is manufactured by laminating a resin film to a tin-plated steel sheet provided with a silane coupling agent coating layer and, thereafter, by applying post-heating treatment to the steel sheet exhibits excellent working adhesiveness of the resin film to the tin-plated steel sheet compared to a resin coated metal sheet which is manufactured by laminating a resin film to which post-heating treatment is not applied to a tin-plated steel sheet provided with a silane coupling agent coating layer. Accordingly, the resin coated metal sheet of the present invention has extremely high industrial applicability.

### Brief Description of the Drawings

Fig. 1 is a schematic perspective view showing a means which applies post-heating to a resin coated metal sheet which is passed after resin coating in such a manner that a high frequency coil is wound around the resin coated metal sheet orthogonal to the advancing direction of the metal sheet.
Fig. 2 is a graph showing a heating cycle of the post-heating.
Fig. 3 is an explanatory view showing a state where silane coupling agent treatment is applied to a tin-plated steel sheet and, thereafter, a resin is applied to a silane coupling agent coated layer.
Fig. 4 is an explanatory view showing a state, after the state shown in Fig. 3 is obtained, heating treatment at "melting point of a coated resin -10°C" or above is applied to the resin coated metal sheet so that a dehydration-condensation reaction of a silane coupling agent sufficiently progresses whereby a bonding force between a tin-plated sheet and a film is strengthened thus remarkably enhancing the adhesiveness of the film.
Fig. 5 is a graph showing the relationship between a silane coupling agent coating weight (axis of abscissas) and S peel strength (axis of ordinate).
Fig. 6 is a graph showing a result of the investigation of a size of a cup delamination width of a shallow drawn cup formed of a resin coated metal sheet after post-heating in relation to a silane coupling agent coating weight.
Fig. 7 is a plan view showing a shape of a specimen for measuring S peel strength.
Fig. 8 is a plan view showing a state where a cut is formed in a surface of a coating resin of a specimen for measuring S peel strength.
Fig. 9 is a plan view showing a state where a score is formed in a specimen for measuring S peel strength.
Fig. 10 is a cross-sectional view of apart of the specimen for measuring S peel strength showing a shape of a portion in which the score is formed.
Fig. 11 is a schematic perspective view showing a state where S peel strength is measured by putting a specimen for measuring S peel strength in a specimen holder.

### Explanation of symbols

71: specimen
71a: one end portion of specimen
71b: the other end portion of specimen
72: cut
73: score
74: specimen holder
74a: specimen insertion portion
74b: specimen holder upper portion

## Claims

1. A method for manufacturing a resin-coated metal sheet comprising the steps of:
forming a tin-plating layer on at least one surface of a metal sheet;
applying a silane coupling agent to the tin-plating layer by coating;
forming a resin layer on the silane coupling agent coating layer;
heating the metal sheet and thereby heating at least an interface region between the tin-plating layer and the silane coupling agent coating layer, the silane coupling agent coating layer, and an interface region between the silane coupling agent coating layer and the resin layer at a temperature which falls within a range from a temperature 10°C below a melting point of a resin of the resin layer to a temperature 100°C above the melting point of the resin of the resin layer, and
wherein after heating the metal sheet, the resin is cooled at a rate of 30°C/sec or more in the crystallization temperature region of the resin, wherein the cooling rate is measured from a maximum sheet temperature to a room temperature.

2. The method for manufacturing a resin-coatedmetal sheet according to claim 1, wherein a heating temperature of the metal sheet is set to a temperature which falls within a range from a temperature 30°C above a melting point of a resin of the resin layer to a temperature 60°C above the melting point of the resin of the resin layer.

3. The method for manufacturing a res in-coated metal sheet according to any one of claims 1 or 2, wherein the heating of the metal sheet is performed by high frequency heating.

4. The method for manufacturing a resin-coatedmetal sheet according to any one of claims 1 to 3, wherein with respect to a temperature of the resin at the time of heating the metal sheet, the heating is performed at a rate of 5°C/sec or more in a crystallization temperature region of the resin, whereby the heating rate is measured from a room temperature to a maximum sheet temperature.

5. The method for manufacturing a resin-coatedmetal sheet according to any one of claims 1 to 4, wherein a tin coating weight of the tin-plating layer is set to a value which falls within a range of 0.5 to 13g/m².

6. Themethod for manufacturing a resin-coatedmetal sheet according to any one of claims 1 to 5, wherein the silane coupling agent is a water-soluble amino-based silane coupling agent, and
a Si coating weight is set to a value which falls within a range of 0.5 to 30mg/m².

## Patentansprüche

1. Verfahren zum Herstellen einer harzbeschichteten Metalltafel, die folgenden Schritte umfassend:
Ausbilden einer Verzinnungsschicht auf zumindest einer Oberfläche der Metalltafel;
Aufbringen eines Silankopplungswirkstoffs auf die Verzinnungsschicht durch Beschichten;
Ausbilden einer Harzschicht auf der Silankopplungswirkstoffbeschichtungsschicht; Erhitzen der Metalltafel und dadurch Erhitzen von zumindest einem Grenzbereich zwischen der Verzinnungsschicht und der Silankopplungswirkstoffbeschichtungsschicht, der Silankopplungswirkstoffbeschichtungsschicht, und eines Grenzbereichs zwischen der Silankopplungswirkstoffbeschichtungsschicht, und der Harzschicht auf eine Temperatur, die innerhalb eines Bereichs von einer Temperatur 10°C unter einem Schmelzpunkt eines Harzes der Harzschicht und einer Temperatur 100°C über dem Schmelzpunkt des Harzes der Harzschicht liegt, und
wobei nach dem Erhitzen der Metalltafel das Harz auf einer Rate von 30°C/s oder mehr im Kristallisierungstemperaturbereich des Harzes gekühlt wird, wobei die Kühlrate von einer Maximaltafeltemperatur zu einer Raumtemperatur gemessen wird.

2. Verfahren zum Herstellen einer harzbeschichteten Metalltafel nach Anspruch 1, wobei eine Erhitzungstemperatur der Metalltafel auf eine Temperatur eingestellt wird, die innerhalb eines Bereichs von einer Temperatur 30°C über einem Schmelzpunkt eines Harzes der Harzschicht und einer Temperatur 60°C über dem Schmelzpunkt des Harzes der Harzschicht liegt.

3. Verfahren zum Herstellen einer harzbeschichteten Metalltafel nach einem der Ansprüche 1 oder 2, wobei die Erhitzung der Metalltafel durch Hochfrequenzerwärmung ausgeführt wird.

4. Verfahren zum Herstellen einer harzbeschichteten Metalltafel nach einem der Ansprüche 1 bis 3, wobei bezüglich einer Temperatur des Harzes zum Zeitpunkt des Erhitzens der Metalltafel die Erhitzung auf einer Rate von 5°C/s oder mehr in einem Kristallisierungstemperaturbereich des Harzes ausgeführt wird, wobei die Erhitzungsrate von einer Raumtemperatur zu einer Maximaltafeltemperatur gemessen wird.

5. Verfahren zum Herstellen einer harzbeschichteten Metalltafel nach einem der Ansprüche 1 bis 4, wobei ein Zinnbeschichtungsgewicht der Verzinnungsschicht auf einen Wert eingestellt wird, der innerhalb eines Bereichs von 0,5 bis 13 g/m² liegt.

6. Verfahren zum Herstellen einer harzbeschichteten Metalltafel nach einem der Ansprüche 1 bis 5, wobei der Silankopplungswirkstoff ein wasserlöslicher aminobasierter Silankopplungswirkstoff ist, und
ein Si-Beschichtungsgewicht auf einen Wert eingestellt wird, der innerhalb eines Bereichs von 0,5 bis 30 mg/m² liegt.

## Revendications

1. Procédé pour fabriquer une feuille de métal recouverte de résine comprenant les étapes suivantes :
formation d'une couche de placage à l'étain sur au moins une surface d'une feuille de métal ;
application d'un agent adhésif au silane à la couche de placage à l'étain par revêtement ;
formation d'une couche de résine sur la couche de revêtement d'agent adhésif au silane ;
chauffage de la feuille de métal et ainsi chauffage d'au moins une région d'interface entre la couche de placage à l'étain et la couche de revêtement d'agent adhésif au silane, de la couche de revêtement d'agent adhésif au silane, et d'une région d'interface entre la couche de revêtement d'agent adhésif au silane et la couche de résine à une température qui tombe dans une plage allant d'une température 10 °C au-dessous d'un point de fusion d'une résine de la couche de résine jusqu'à une température 100 °C au-dessus du point de fusion de la résine de la couche de résine, et
dans lequel après chauffage de la feuille de métal, la résine est refroidie à une vitesse de 30 °C/s ou plus dans la région de température de cristallisation de la résine, dans lequel la vitesse de refroidissement est mesurée depuis une température de feuille maximale jusqu'à une température ambiante.

2. Procédé pour fabriquer une feuille de métal recouverte de résine selon la revendication 1, dans lequel une température de chauffage de la feuille de métal est fixée à une température qui tombe à l'intérieur d'une plage allant d'une température 30 °C au-dessus d'un point de fusion d'une résine de la couche de résine jusqu'à une température 60 °C au-dessus du point de fusion de la résine de la couche de résine.

3. Procédé pour fabriquer une feuille de métal recouverte de résine selon l'une quelconque des revendications 1 ou 2, dans lequel le chauffage de la feuille de métal est effectué par chauffage haute fréquence.

4. Procédé pour fabriquer une feuille de métal recouverte de résine selon l'une quelconque des revendications 1 à 3, dans lequel en ce qui concerne une température de la résine au moment du chauffage de la feuille de métal, le chauffage est effectué à une vitesse de 5 °C/s ou plus dans une région de température de cristallisation de la résine, de sorte que la vitesse de chauffage est mesurée depuis une température ambiante jusqu'à une température de feuille maximale.

5. Procédé pour fabriquer une feuille de métal recouverte de résine selon l'une quelconque des revendications 1 à 4, dans lequel un grammage de revêtement à l'étain de la couche de placage à l'étain est fixé à une valeur qui tombe dans une plage de 0,5 à 13 g/m².

6. Procédé pour fabriquer une feuille de métal recouverte de résine selon l'une quelconque des revendications 1 à 5, dans lequel l'agent adhésif au silane est un agent adhésif au silane à base d'amino hydrosoluble, et
un grammage de revêtement de Si est fixé à une valeur qui tombe dans une plage de 0,5 à 30 mg/m².
